# EUROPEAN PATENT SPECIFICATION

(11) **EP 2 649 675 B1**
(45) Date of publication and mention of the grant of the patent: **22.07.2020**
(21) Application number: 11810715.0
(22) Date of filing: 09.12.2011
(51) Int. Cl.: H01Q 1/12

(54) **WINDOW ASSEMBLY HAVING A TRANSPARENT LAYER WITH A SLOT FOR A WIRE ANTENNA ELEMENT**
FENSTERANORDNUNG MIT EINER TRANSPARENTEN SCHICHT MIT EINEM STECKPLATZ FÜR EIN DRAHTANTENNENELEMENT
ENSEMBLE FENÊTRE AYANT UNE COUCHE TRANSPARENTE AVEC UNE FENTE POUR UN ÉLÉMENT D'ANTENNE FILAIRE

(30) Priority: 09.12.2010 US 421376 P; 09.12.2010 US 421381 P; 27.12.2010 US 201061427450 P; 09.12.2010 US 421386 P; 09.12.2010 US 421374 P
(43) Date of publication of application: 16.10.2013
(73) Proprietor: AGC Automotive Americas R & D, Inc., Ypsilanti, MI 48197-9701 (US)
(72) Inventor: VILLARROEL, Wladimiro, Ypsilanti, MI 48197 (US); LEE, Ming, Ypsilanti, MI 48198 (US); HORIKI, Yasutaka, Ypsilanti, MI 48198 (US); LEE, Kwan-Ho, Ann Arbor, MI 48103 (US)
(74) Representative: Neilson, Martin Mark
(86) International application number: PCT/US2011/064147
(87) International publication number: WO 2012/078979

(56) References cited:
- EP-A2- 0 961 342
- US-A- 3 655 545
- US-A- 4 849 766
- US-A- 5 012 255
- US-A- 5 898 407
- US-A1- 2009 128 431
- US-B1- 6 417 811

## Description

### BACKGROUND OF THE INVENTION

### 1. Field of the Invention

The subject invention generally relates to a window assembly for a vehicle. More specifically, the subject invention relates to a wire antenna element disposed within a slot defined by a transparent layer disposed within the window assembly.

### 2. Description of the Related Art

Recently, there is an increasing demand in vehicle windshields having clear films or coatings embedded within the windshield for various purposes. Such clear films or coatings often have metal compounds, such as metal oxides, for making the clear films or coatings electrically conductive. These clear films or coatings have been utilized in defogging or defrosting systems and even as active antenna elements for vehicles. More recently, the clear films or coatings have been applied to windshields to absorb heat from sunlight penetrating the windshield. In particular, the clear films or coatings absorb infrared radiation from sunlight. In so doing, the clear films or coatings reduce the amount of infrared radiation entering an interior of the vehicle. The clear films or coatings enable a lower interior temperature as compared to a vehicle having a windshield with no clear films or coatings. As a result, during the warm months, less energy is required to lower the interior temperature of the vehicle. To maximize efficiency of the clear films or coatings to absorb infrared radiation, the clear films or coatings are often applied over a substantial part of the windshield, often covering the entire field of view of the driver.

Traditionally, wire antennas have been employed on vehicle windshields for a variety of applications. The wire antennas are often placed upon various locations of the windshield and are energized by a feeder line, which is coupled to the wire antenna. Frequently, it is necessary for the wire antennas to be disposed within or on an outer surface of the windshield of the vehicle. For the wire antenna to effectively receive or transmit radio waves without interruption, it is also necessary to reduce surrounding electromagnetic interference with the wire antenna to the extent possible.

Although the clear films or coatings effectively reduce transmission of infrared radiation through the windshield, the clear films or coatings may also negatively affect the ability of the wire antenna to adequately transmit or receive radio waves. Specifically, as mentioned above, the clear films or coatings are electrically conductive and therefore naturally have the potential to interfere adversely with the radiation pattern and gain of the wire antenna on the windshield. Furthermore, where the clear films or coatings are applied over a substantial part of the windshield, there remains minimal space on the windshield to place the wire antenna such that the clear films or coatings do not adversely affect the functionality of the wire antenna.

The patent document US5898407 discloses an antenna window according to the preamble of the independent claim 1.

### SUMMARY OF THE INVENTION AND ADVANTAGES

The invention provides a window assembly for a vehicle, as defined by the attached independent claim 1. The dependent claims define preferred embodiments of the invention. The scope of the invention is solely defined by the attached claims. Non claimed embodiments of the description are only provided for the sake of a better understanding of the invention.

### BRIEF DESCRIPTION OF THE DRAWINGS

Other advantages of the present invention will be readily appreciated, as the same becomes better understood by reference to the following detailed description when considered in connection with the accompanying drawings wherein:
FIG. 1 is a perspective view of a vehicle having a window assembly with a transparent layer defining a slot and with a wire antenna element disposed within the slot;
FIG. 2a is a cross-sectional partial view of the window assembly having the transparent layer sandwiched between an interior and exterior substrate and the wire antenna element disposed within the slot on an outer surface of the interior substrate;
FIG. 2b is a cross-sectional partial view of the window assembly having the transparent layer and the wire antenna element disposed within the slot and sandwiched between the interior and exterior substrates;
FIG. 2c is a cross-sectional partial view of the window assembly having the transparent layer sandwiched between the interior and exterior substrates and the wire antenna element disposed within the slot on an outer surface of the exterior substrate;
FIG. 3 is a plan view of the window assembly having the transparent layer covering a majority of the window assembly and defining the slot according to one embodiment;
FIG. 4 is a plan view of the window assembly having the transparent layer covering the majority of the window assembly and defining the slot according to an alternative embodiment;
FIG. 5a is a cross-sectional partial view of the window assembly having an interlayer sandwiched between the transparent layer and an inner surface of the interior substrate with the wire antenna element disposed within the slot on the outer surface of the exterior substrate;
FIG. 5b is a cross-sectional partial view of the window assembly having the interlayer sandwiched between the transparent layer and the inner surface of the interior substrate with the wire antenna element disposed within the slot and sandwiched between the interlayer and an inner surface of the exterior substrate;
FIG. 5c is a cross-sectional partial view of the window assembly having the interlayer sandwiched between the transparent layer and the inner surface of the interior substrate with the wire antenna element disposed within the slot on the outer surface of the interior substrate;
FIG. 5d is a cross-sectional partial view of the window assembly having the interlayer sandwiched between the transparent layer and the inner surface of the exterior substrate with the wire antenna element disposed within the slot on the outer surface of the exterior substrate;
FIG. 5e is a cross-sectional partial view of the window assembly having the interlayer sandwiched between the transparent layer and the inner surface of the exterior substrate with the wire antenna element disposed within the slot and sandwiched between the interlayer and an inner surface of the interior substrate;
FIG. 5f is a cross-sectional partial view of the window assembly having the interlayer sandwiched between the transparent layer and the inner surface of the exterior substrate with the wire antenna element disposed within the slot on the outer surface of the interior substrate;
FIG. 5g is a cross-sectional partial view of the window assembly having one portion of the wire antenna element disposed coplanar with respect to the transparent layer and another portion of the wire antenna element disposed non-coplanar with respect to the transparent layer and on the outer surface of the interior substrate;
FIG. 5h is a cross-sectional partial view of the window assembly having the one portion of the wire antenna element disposed coplanar with respect to the transparent layer and the other portion disposed non-coplanar with respect to the transparent layer and extending into the interlayer;
FIG. 6a is an enlarged view of the window assembly having the wire antenna element including metal wire disposed within the slot of the transparent layer with a feeding element coupled to the wire antenna element;
FIG. 6b is a partial cross-sectional view of the window assembly having the feeding element spaced from and capacitively coupled to the wire antenna element including metal wire;
FIG. 6c is a partial cross-sectional view of the window assembly having the feeding element abutting and in direct electrical connection with the wire antenna element including metal wire; and
FIG. 7 is a cross-sectional partial view of the window assembly having a first wire antenna element disposed within the slot and sandwiched between the interlayer and the inner surface of the exterior substrate and a second wire antenna element disposed on the outer surface of the interior substrate.

### DETAILED DESCRIPTION OF THE INVENTION

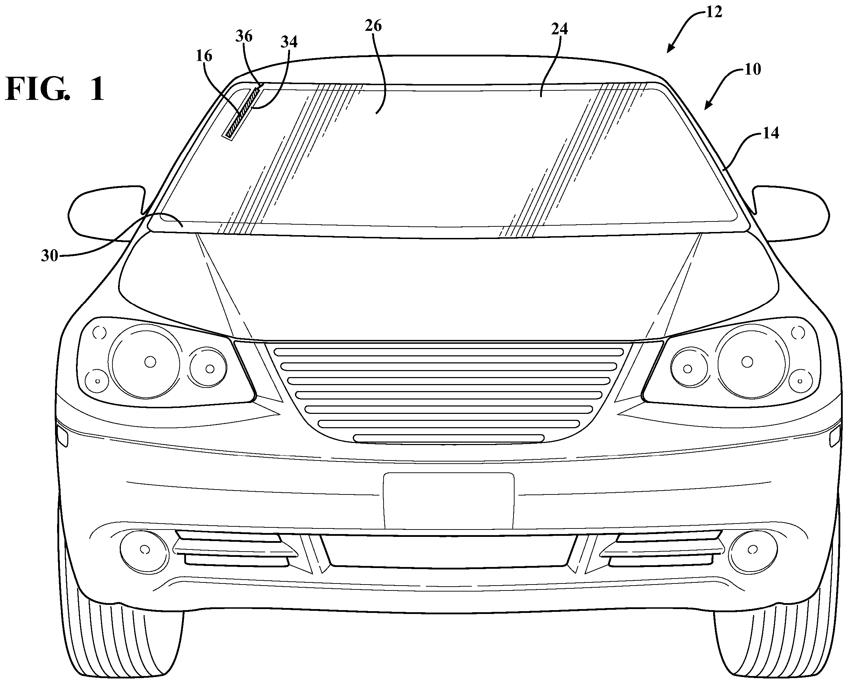

Referring to the Figures, wherein like numerals indicate corresponding parts throughout the several views, a window assembly is shown generally at 10 in FIG. 1. Most preferably, the window assembly 10 is for a vehicle 12. The window assembly 10 may be a front window (windshield) as illustrated in FIG. 1. Alternatively, the window assembly 10 may be a rear window (backlite), a roof window (sunroof), or any other window of the vehicle 12. Typically, the vehicle 12 defines an aperture and the window assembly 10 closes the aperture. The aperture is conventionally defined by a window frame 14 of the vehicle 12 which is typically electrically conductive. The window assembly 10 of this invention may be for applications other than for vehicles 12. Specifically, the window assembly 10 may be for architectural applications such as homes, buildings, and the like.

A wire antenna element 16 is included with the window assembly 10. In a preferred embodiment, the wire antenna element 16 is configured to receive linearly polarized radio frequency (RF) signals. Specifically, the linearly polarized RF signals which the wire antenna element 16 may receive include, but are not limited to, AM, FM, RKE, DAB, DSRC, WiMAX, or DTV signals. The wire antenna element 16 may also be configured to transmit linearly polarized RF signals. Most preferably, the wire antenna element 16 is configured for transmission and/or reception of FM frequencies generally in the range from 88 MHz to 108 MHz. Furthermore, the wire antenna element 16 may be configured to transmit or receive circularly polarized RF signals such as GPS signal, Satellite Digital Audio Radio Service (SDARS) signals, and the like. The window assembly 10 may include a plurality of wire antenna elements 16.

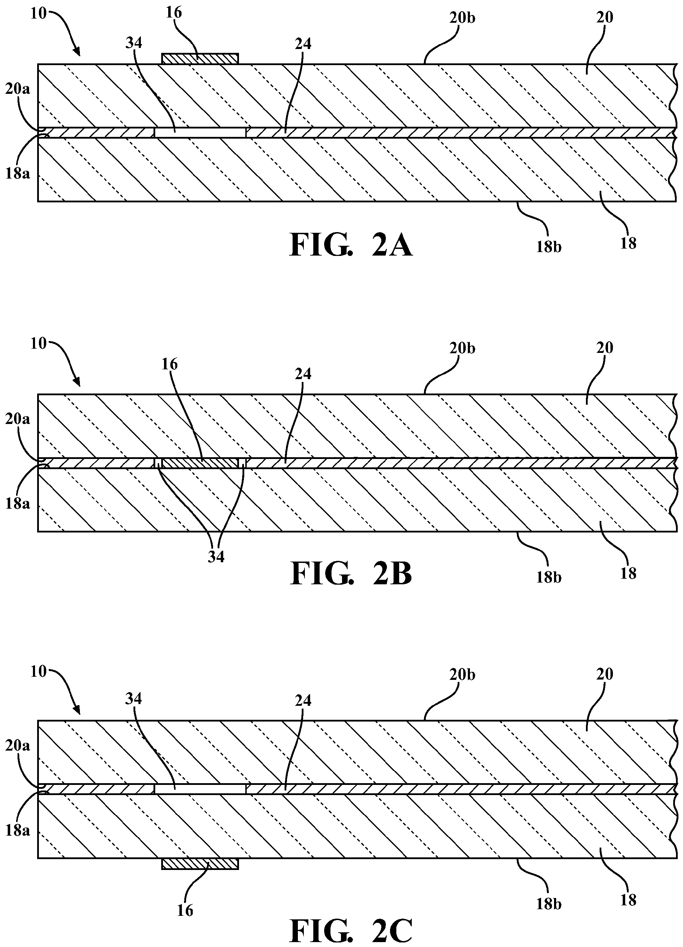

As illustrated in FIGS. 2a - 2c, the window assembly 10 includes an exterior substrate 18 and an interior substrate 20 disposed adjacent the exterior substrate 18. In one embodiment, the interior substrate 20 is disposed parallel to and spaced from the exterior substrate 18 such that the substrates 18, 20 are not contacting one another. However, it is to be appreciated that the exterior substrate 18 may directly abut the interior substrate 20. Typically, the exterior and interior substrates 18, 20 are electrically non-conductive. As mentioned herein, the term "non-conductive" refers generally to a material, such as an insulator or dielectric, that when placed between conductors at different electric potentials, permits a negligible current to flow through the material. The exterior and interior substrates 18, 20 are also substantially transparent to light. However, it is to be appreciated that the exterior and interior substrates 18, 20 may be colored or tinted and still be substantially transparent to light. As used herein, the term "substantially transparent" is defined generally as having a visible light transmittance of greater than 60 percent.

The exterior and interior substrates 18, 20 may be joined together to form the window assembly 10. It is preferred that the exterior and interior substrates 18, 20 are panes of glass. The panes of glass are preferably automotive glass and, more preferably, soda-lime-silica glass. The exterior and interior substrates 18, 20 may be plastic, fiberglass, or other suitable electrically non-conductive and substantially transparent material. For automotive applications, the exterior and interior substrates 18, 20 are each typically 3.2 mm thick.

Each of the exterior and interior substrates 18, 20 has an inner surface 18a, 20a and an outer surface 18b, 20b. The outer surface 18b of the exterior substrate 18 typically faces an exterior of the vehicle 12. The outer surface 20b of the interior substrate 20 typically faces an interior of the vehicle 12. The inner surfaces 18a, 20a of the exterior and interior substrates 18, 20 typically face one another when the exterior and interior substrates 18, 20 are joined together to form the window assembly 10.

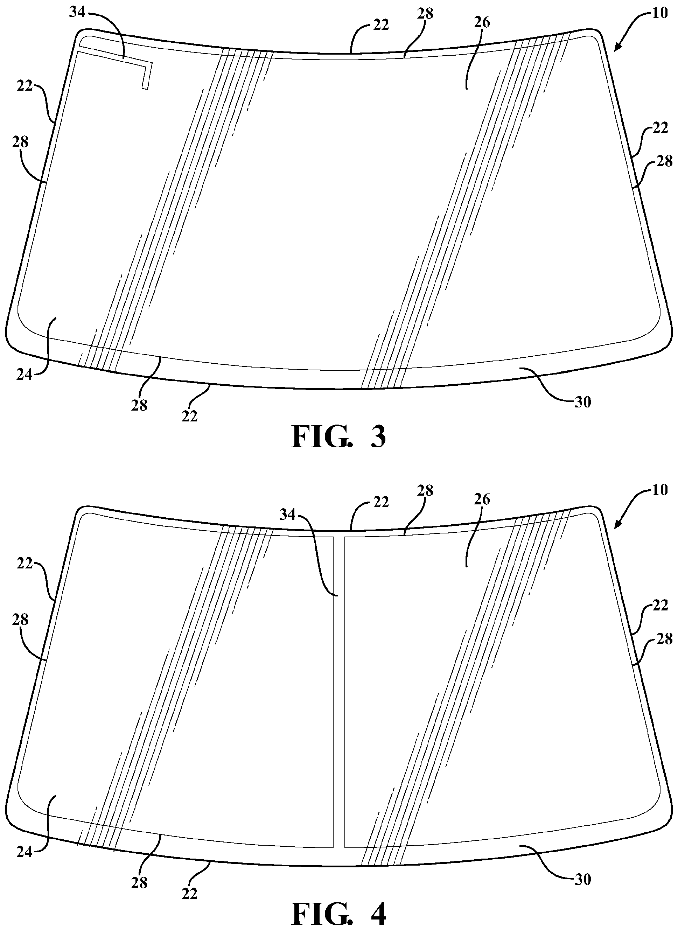

As shown in FIGS. 3 and 4, the exterior and interior substrates 18, 20 define a first peripheral boundary 22. The first peripheral boundary 22 is defined preferably by a peripheral edge of the window assembly 10. Conventionally, the peripheral edge of the window assembly 10 is shared by the exterior and interior substrates 18, 20. Specifically, the exterior and interior substrates 18, 20 typically have substantially similar areas and shapes with each substrate 18, 20 having an edge forming part of the peripheral edge when the substrates 18, 20 are joined. It is to be appreciated that the edges of exterior and interior substrates 18, 20 need not align to define the first peripheral boundary 22. In other words, the edge of the exterior or interior substrate 18, 20 may extend beyond the edge of the other, respectively. In such instances, the first peripheral boundary 22 may be defined by either or both edges of the substrates 18, 20. Conventionally, the first peripheral boundary 22 has a generally trapezoidal configuration. However, the first peripheral boundary 22 may have any suitable shape.

Referring back to FIGS. 2a-2c, a transparent layer 24 is disposed between the exterior and interior substrates 18, 20. The window assembly 10 preferably includes the transparent layer 24 sandwiched between the exterior and interior substrates 18, 20 such that the transparent layer 24 is abutting the substrates 18, 20. More specifically, the transparent layer 24 is preferably disposed on the inner surfaces 18a, 20a of the exterior and/or interior substrates 18, 20. Disposal of the transparent layer 24 between the exterior and interior substrates 18, 20 protects the transparent layer 24 from direct contact with environmental factors, which may damage the transparent layer 24 such as snow, ice, and the like.

The transparent layer 24 is preferably formed from a coating. Typically, the transparent layer 24 is substantially transparent to light. Accordingly, a driver or occupant of the vehicle 12 may see through the window assembly 10 having the transparent layer 24. With the transparent layer 24 disposed within the window assembly 10, the window assembly 10 generally exhibits greater than 60 percent visible light transmission through the window assembly 10. The transparent layer 24 preferably absorbs heat from sunlight penetrating the window assembly 10. In particular, the transparent layer 24 reduces transmission of infrared radiation through the window assembly 10. As used herein, the term "transparent layer" may include one or more coatings and/or films of selected composition. The coatings and/or films forming the transparent layer 24 may be single or multiple layers. The transparent layer 24 may be disposed in the window assembly 10 according to any suitable method, such as chemical vapor deposition, magnetron sputter vapor deposition, spray pyrolysis, and the like.

The transparent layer 24 includes a metal compound such that the transparent layer 24 is electrically conductive. As mentioned herein, the term "electrically conductive" refers generally to a material, such as a conductor, exhibiting low electrical resistivity for effectively allowing flow of electric current through the material. Preferably, the metal compound includes a metal oxide. However, the metal compound may also include a metal nitride, and the like. The metal oxide may include a tin oxide, such as indium tin oxide, or the like. However, the transparent layer 24 may include other metal oxides, including, but not limited to, silver oxide. The metal compound may also be doped with an additive, such as fluorine. Specifically, the additive may be included in the metal compound to optimize the light transmittance and electrical resistivity of the transparent layer 24. The transparent layer 24 preferably has a sheet resistance in a range between 0.5-20 Ω/square. More preferably, the transparent layer 24 has a sheet resistance of approximately 2 Ω/square. The sheet resistance may also be known as a surface resistance of the transparent layer 24.

The transparent layer 24 defines an area 26 covering the window assembly 10. As shown in FIGS. 3 and 4, the area 26 may cover a majority of the window assembly 10. Specifically, the majority of the window assembly 10 is preferably defined as greater than 50 percent of the window assembly 10. More typically, the majority is greater than 75 percent of the window assembly 10. Generally, the transparent layer 24 covers the majority of the window assembly 10 for maximizing the reduction of transmission of infrared radiation through the window assembly 10. However, it is to be appreciated that the area 26 of the transparent layer 24 may cover a minority of the window assembly 10. For example, the area 26 may cover 20 percent of the window assembly 10 along the upper portion of the window assembly 10. The area 26 generally defines a shape substantially similar to the first peripheral boundary 22. However, the area 26 may have any suitable shape for covering the window assembly 10.

The area 26 of the transparent layer 24 defines a second peripheral boundary 28. The second peripheral boundary 28 is defined by a boundary or perimeter of the area 26. An outer region 30 is defined on the window assembly 10 between the first and second peripheral boundaries 22, 28. The outer region 30 is devoid of the transparent layer 24 and is therefore, electrically non-conductive. The outer region 30 has a width defined as a distance between the first and second peripheral boundaries 22, 28. Preferably, the width is greater than 0 mm and less than 200 mm. The width of the outer region 30 may vary depending upon how the window assembly 10 of the present invention is fitted to the window frame 14 of the vehicle 12. Specifically, the outer region 30 may have the width equal to an overlap between the window frame 14 and the window assembly 10. However, the outer region 30 may separate the transparent layer 24 from the window frame 14 of the vehicle 12 to avoid the possibility of an electrical path between the transparent layer 24 and the window frame 14 that may adversely affect the efficiency and radiation pattern of the wire antenna element 16. Furthermore, the outer region 30 may protect the transparent layer 24 by separating the transparent layer 24 from the first peripheral boundary 22 that is subjected to environmental factors, which may degrade the quality of the transparent layer 24.

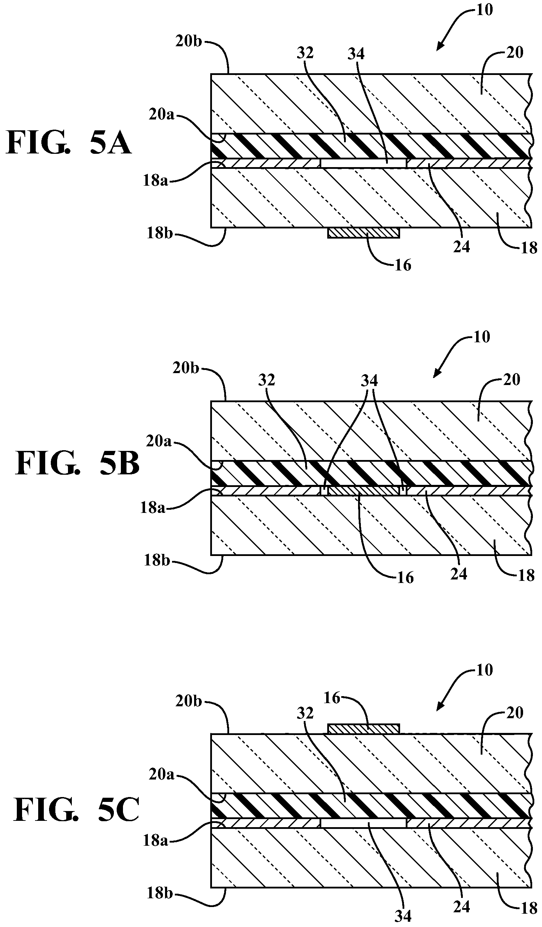

Although not required, an interlayer 32 may be disposed between the inner surfaces 18a, 20a of the exterior and interior substrates 18, 20, as illustrated in FIGS. 5a-5h. In other words, the window assembly 10 may include the exterior and interior substrates 18, 20 having the transparent layer 24 and the interlayer 32 sandwiched therebetween. Preferably, the interlayer 32 bonds the exterior and interior substrates 18, 20 and prevents the window assembly 10 from shattering upon impact. Furthermore, the interlayer 32 typically is substantially transparent to light and includes a polymer or thermoplastic resin, such as polyvinyl butyral (PVB). However, other suitable materials for implementing the interlayer 32 may be used. Preferably, the interlayer 32 has a thickness of between 0.5 mm to 1 mm.

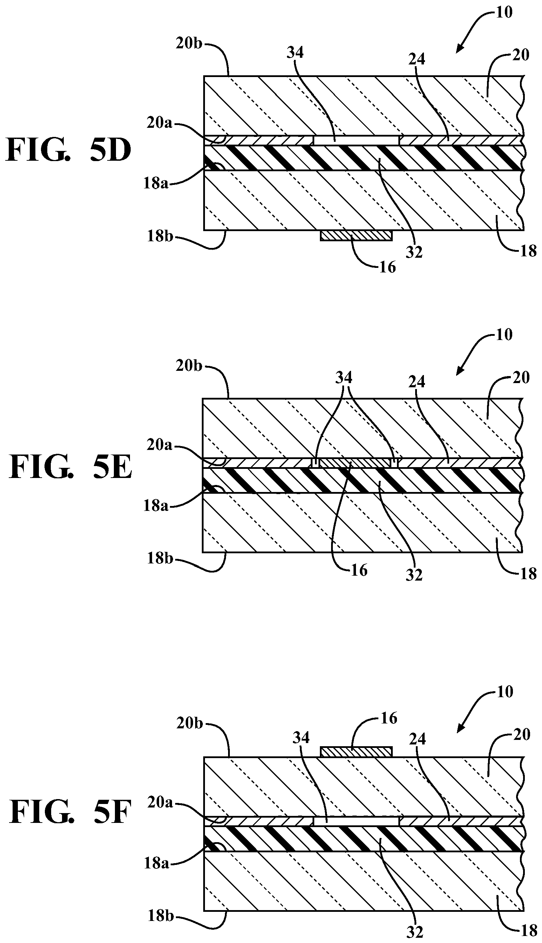

The transparent layer 24 may be disposed adjacent the interlayer 32. More specifically, the transparent layer 24 may be disposed between the interlayer 32 and the inner surface 18a of the exterior substrate 18, as shown in FIGS. 5a-5c. Alternatively, as shown in FIGS. 5d-5h, the transparent layer 24 may be disposed between the interlayer 32 and the inner surface 20a of the interior substrate 20. Preferably, the window assembly 10 includes the transparent layer 24 and interlayer 32 sandwiched between the exterior and interior substrates 18, 20 such that the interlayer 32 and the transparent layer 24 are abutting the inner surfaces 18a, 20a of the exterior and/or interior substrates 18, 20.

As shown in FIGS. 3 and 4, a slot 34 is defined by the area 26. The slot 34 opens into the outer region 30. The slot 34 is devoid of the transparent layer 24 and electrically non-conductive. The slot 34 opens into the outer region 30 such that the slot 34 and the outer region 30 may form an electrically non-conductive region. However, it is to be appreciated that the slot 34 and the outer region 30 are generally distinct regions on the window assembly 10. As recited above, the outer region 30 is defined between the first and second peripheral boundaries 22, 28. However, the second peripheral boundary 28 separates the slot 34 from the outer region 30. Thus, the slot 34 is defined by the area 26 within the second peripheral boundary 28 such that the slot 34 is generally defined independent of other electrically conductive components, such as the vehicle 12 body, or the like. It is to be appreciated that the second peripheral boundary 28 generally excludes boundaries of the transparent layer 24 defining the slot 34 within the area 26. In other words, it is preferred that the second peripheral boundary 28 be continuously adjacent the outer region 30 despite interruption of the peripheral boundary 28 by the slot 34. As such, as shown in the embodiment of FIG. 4, it is to be appreciated that the area 26 of the transparent layer 24 is preferably not sub-divided into separate independent areas, but rather the area 26 remains unitary within the second peripheral boundary 22.

The slot 34 may be formed on the window assembly 10 according to any suitable technique known in the art. For instance, the inner surfaces 18a, 20a of one of the exterior and interior substrates 18, 20 may be masked before application of the transparent layer 24 to provide a desired shape of the slot 34. Alternatively, the transparent layer 24 may first be applied to the window assembly 10. Thereafter, selected portions of the transparent layer 24 may be removed or deleted to provide a desired shape of the slot 34. Removal or deletion of selected portions of the transparent layer 24 may be accomplished using lasers, abrasive tools, chemical removal, and the like.

The wire antenna element 16 preferably includes metal wire. As used herein, the term "wire" refers generally to at least one strand or rod of metal. Typically, the strands or rods are flexible and are formed of copper, or other metals. However, the wire antenna element 16 may also be formed of an electrically conductive paste, such as a silver paste. The wire antenna element 16 may be applied to the window assembly 10 according to any suitable method, such as printing, firing, and the like. The wire antenna element 16 has a predetermined diameter and length generally correlating to a predetermined wavelength of radio waves intended to be transmitted or received by the wire antenna element 16. The wire antenna element 16 is substantially opaque to light such that light cannot readily pass through the wire antenna element 16. In other words, the wire antenna element 16 has a visible light transmittance of generally less than 5 percent.

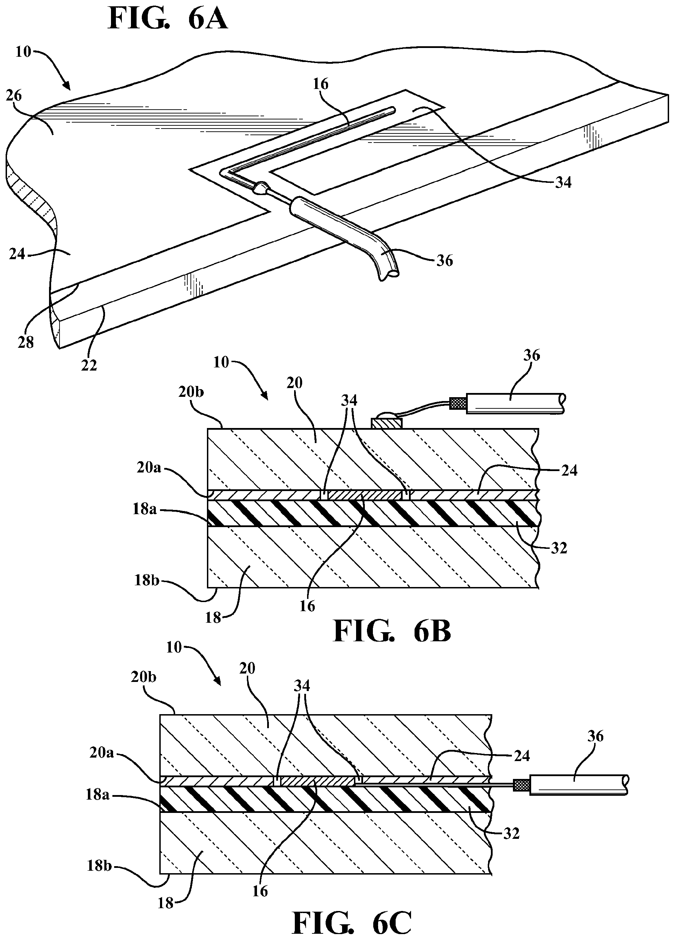

As described above, the wire antenna element 16 preferably transmits or receives linearly polarized RF signals. As such, the wire antenna element 16 preferably has a monopole or dipole configuration, such as the wire antenna element 16 illustrated in FIG. 6a. Furthermore, the wire antenna element 16 may have a loop or meander line configuration. Alternatively, the wire antenna element 16 may be included as a subcomponent of a more complex antenna assembly. It is to be appreciated that the wire antenna element 16 may have other configurations not specifically recited herein. It is also to be understood that the configuration of the wire antenna element 16 in FIG. 6a is for illustrative purposes and is not intended to limit the scope of the present invention to the specific embodiment illustrated in the Figure.

The wire antenna element 16 is disposed within the slot 34. Within the slot 34, the wire antenna element 16 is neither directly abutting nor in direct electrical contact with the transparent layer 24. Specifically, as illustrated in FIGS. 2b, 5b, and 5e, the wire antenna element 16 may be disposed coplanar with respect to the transparent layer 24. In other words, the wire antenna element 16 may be disposed within the slot 34 on the same layer in the window assembly 10 as the transparent layer 24. Alternatively, as shown in FIGS. 2a, 2c, 5a, 5c, 5d, and 5f, the wire antenna element 16 may be disposed non-coplanar with respect to the transparent layer 24. In such instances, the wire antenna element 16 is disposed within the slot 34 but on a different layer in the window assembly 10 than the transparent layer 24.

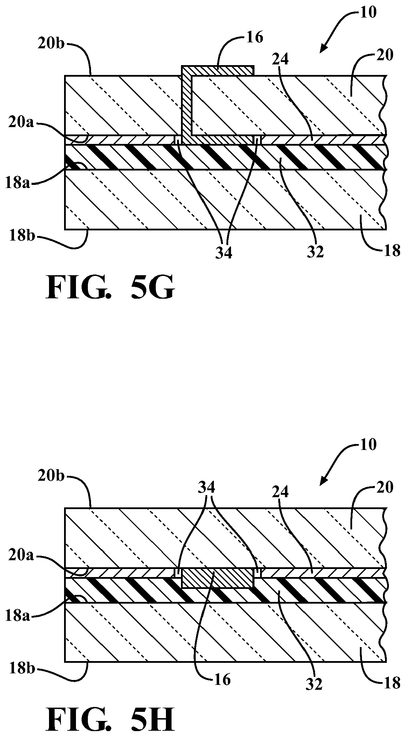

Still, the wire antenna element 16 may simultaneously be disposed coplanar and non-coplanar with respect to the transparent layer 24. Specifically, one portion of the wire antenna element 16 may be disposed on the same layer in the window assembly 10 as the transparent layer 24, while another portion of the wire antenna element 16 is disposed on another layer in the window assembly 10. For example, FIG. 5g shows the one portion of the wire antenna element 16 disposed coplanar with respect to the transparent layer 24 and the other portion of the wire antenna element 16 disposed on the outer surface 20b of the interior substrate 20. In another embodiment shown in FIG. 5h, the one portion of the wire antenna element 16 is disposed coplanar with respect to the transparent layer 24 while the other portion is extending into the interlayer 32. The wire antenna element 16 may extend into the interlayer 32 or extend into one of the exterior and interior substrates 18, 20. It is to be appreciated that the wire antenna element 16 may be disposed non-coplanar with respect to the transparent layer 24 and still be disposed within the slot 34.

Furthermore, the wire antenna element 16 may be partially disposed within the outer region 30. In other words, the wire antenna element 16 may be partially disposed within the slot 34 and partially disposed within the outer region 30. As mentioned above, the slot 34 opens into the outer region 30 and is generally separated from the outer region 30 by the second peripheral boundary 28. Furthermore, the slot 34 and the outer region 30 are both electrically non-conductive. Therefore, the wire antenna element 16 may partially overlap the outer region 30 and still be disposed within the slot 34. In such instances, the wire antenna element 16 is generally not exposed to electromagnetic interference presented by the transparent layer 24. Specifically, the wire antenna element 16 is still neither directly abutting nor in direct electrical contact with the transparent layer 24.

The slot 34 may have any suitable dimensions, configuration, or shape for accommodating the wire antenna element 16. For instance, the slot 34 may have a linear configuration, a curved configuration, or the like. Preferably, the slot 34 is sized such that the wire antenna element 16 substantially occupies the slot 34. In other words, it is preferable for the transparent layer 24 to be removed or deleted to the extent to accommodate effectively the wire antenna element 16. As such, the area 26 of the transparent layer 24 is maximized for its other functions, such as absorbing infrared radiation penetrating the window assembly 10. Alternatively, the wire antenna element 16 may occupy only a minority of the slot 34.

In one embodiment, as illustrated in FIG. 4 the slot 34 opens into the outer region 30 at two independent locations along the second peripheral boundary 28 of the area 26. As such, the slot 34 generally interrupts the second peripheral boundary 28 at the two independent locations. In such instances, the slot 34 may extend through a center of the area 26 thereby bisecting the area 26 equally within the second peripheral boundary 28. Alternatively, the slot 34 may interrupt the second peripheral boundary 28 at the two independent locations such that the area 26 is bisected unequally within the second peripheral boundary 28.

The window assembly 10 may also include a plurality of slots 34. Each of the plurality of slots 34 may be utilized to accommodate a separate wire antenna element 16 on the window assembly 10. The plurality of slots 34 may intersect one another to form a common electrically non-conductive region between the plurality of slots 34 and the outer region 30. Alternatively, the plurality of slots 34 may be independent of each other such that each slot 34 does not intersect one another. Additionally, the plurality of slots 34 may divide the area 26 into a plurality of independent sub-areas within the second peripheral boundary 28. A wire antenna element 16 may be disposed within the plurality of slots 34. Alternatively, a plurality of wire antenna elements 16 may be disposed within the plurality of slots 34.

While disposed within the slot 34, the wire antenna element 16 may be arranged according to several configurations with respect to the transparent layer 24, interlayer 32, and substrates 18, 20 of the window assembly 10. In instances where the window assembly 10 is absent the interlayer 32, the wire antenna element 16 may be disposed within the slot 34 between the exterior and interior substrates 18, 20 of the window assembly 10 as shown in one embodiment in FIG. 2b. In FIG. 2b, the wire antenna element 16 is coplanar with respect to the transparent layer 24. According to another embodiment, as shown in FIG. 2a, the wire antenna element 16 may be disposed within the slot 34 on the outer surface 20b of the interior substrate 20 of the window assembly 10. In another embodiment, as shown in FIG. 2c, the wire antenna element 16 may be disposed within the slot 34 on the outer surface 18b of the exterior substrate 18 of the window assembly 10. In the embodiments of FIGS. 2a and 2c, the wire antenna element 16 is non-coplanar with respect to the transparent layer 24.

Where the window assembly 10 has the interlayer 32 disposed between the transparent layer 24 and the inner surface 20a of the interior substrate 20, FIG. 5b shows the wire antenna element 16 disposed within the slot 34 between the interlayer 32 and the inner surface 18a of the exterior substrate 18, according to one embodiment. Alternatively, as shown in FIG. 5c, the wire antenna element 16 is disposed within the slot 34 on the outer surface 20b of the interior substrate 20. In another embodiment, as shown in FIG. 5a, the wire antenna element 16 may also be disposed within the slot 34 on the outer surface 18b of the exterior substrate 18. The wire antenna element 16 is coplanar with respect to the transparent layer 24 in FIG. 5b, and non-coplanar with respect to the transparent layer 24 in FIGS. 5a and 5c.

Where the window assembly 10 has the interlayer 32 disposed between the transparent layer 24 and the inner surface 18a of the exterior substrate 18, FIG. 5e shows the wire antenna element 16 disposed within the slot 34 between the interlayer 32 and the inner surface 20a of the interior substrate 20, according to one embodiment. In another embodiment, as shown in FIG. 5d, the wire antenna element 16 is disposed within the slot 34 on the outer surface 18b of the exterior substrate 18. The wire antenna element 16 may also be disposed within the slot 34 on the outer surface 20b of the interior substrate 20, as shown in FIG. 5f. The wire antenna element 16 is coplanar with respect to the transparent layer 24 in FIG. 5e, and non-coplanar with respect to the transparent layer 24 in FIGS. 5d and 5f. Although not specifically illustrated throughout the Figures, it is to be appreciated that the wire antenna element 16 may additionally be disposed on a side of the interlayer 32 opposite the side of the interlayer 32 disposed adjacent the transparent layer 24. Additionally, it is to be appreciated that the wire antenna element 16 and/or the transparent layer 24 may embedded within the interlayer 32 such that the wire antenna element 16 and/or the transparent layer 24 are sandwiched between the interlayer 32.

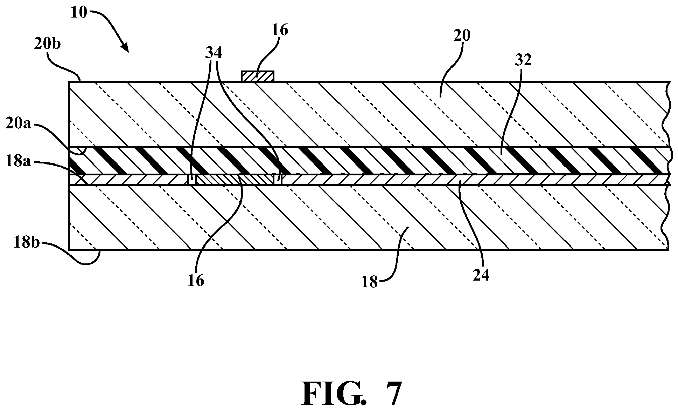

Still, according to another embodiment as shown in FIG. 7, the window assembly 10 includes a second wire antenna element 16 wherein one of the wire antenna elements 16 is disposed on the outer surface 20b of the interior substrate 20 and the other of the wire antenna elements 16 is disposed on the inner surface 18a of the exterior substrate 18. Generally, at least one of the wire antenna elements 16 is disposed within the slot 34. However, both wire antenna elements 16 may be disposed within the slot 34 on different layers of the window assembly 10. Furthermore, both wire antenna elements 16 may overlap one another on different layers of the window assembly 10. It is to be appreciated that the first and second wire antenna elements 16 may implement a diversity antenna system whereby the first and second wire antenna elements 16 may be configured to transmit or receive signals in multiple directions within a field of reception. Specifically, the received signal may be switched or combined between the first and second wire antenna elements 16 to minimize interference and temporary fading of the signal. It is to be appreciated that the wire antenna elements 16 may be disposed according to numerous embodiments with respect to the substrates 18, 20, the transparent layer 24, and the interlayer 32, not specifically shown in the Figures.

As shown generally in FIG. 6, the window assembly 10 includes a feeding element 36 coupled to the wire antenna element 16 for energizing the wire antenna element 16. With respect to the feeding element 36, the term "energize" is understood to describe an electrical relationship between the feeding element 38 and the wire antenna element 16 whereby the feeding element 36 excites the wire antenna element 16 for transmission of radio waves, and is electrically coupled to the wire antenna element 16 for reception of impinging radio waves by the antenna element 16. The feeding element 36 may include any suitable material for energizing the wire antenna element 16. For instance, the feeding element 36 may include a feeding strip, a feeding wire, or a combination of both. In addition, the feeding element 36 may be a balanced or unbalanced line. For example, the feeding element 36 may be an unbalanced coaxial cable, microstrip, or single wire line. Furthermore, the feeding element 36 may include any suitable feeding network for providing phase shifting to the RF signal transmitted or received by the wire antenna element 16. In addition, the feeding element 36 may include a transparent coating of the same type as the transparent layer 24 and/or the wire antenna element 16. Additionally, a plurality of feeding elements 36 may be coupled to one or more wire antenna elements 16 for energizing the wire antenna elements 16. The feeding element 36 is generally disposed on the inner surface 18a, 20a or outer surface 18b, 20b of one of the exterior and interior substrates 18, 20 of the window assembly 10. However, it is to be appreciated that the feeding element 36 may be disposed on any layer of the window assembly 10. Furthermore, the feeding element 36 may be disposed coplanar or non-coplanar with respect to the wire antenna element 16.

According to one embodiment, as shown in FIG. 6c, the feeding element 36 is abutting and in direct electrical connection with the wire antenna element 16 for energizing the wire antenna element 16. In other words, the feeding element 36 is directly wired or soldered to the wire antenna element 16. The feeding element 36 passes electrical current to the wire antenna element 16 directly through an electrically conductive material, such as a feeding strip or wire, physically attached to the wire antenna element 16. It is to be appreciated that the feeding element 36 and the wire antenna element 16 may be abutting and in direct electrical connection on the window assembly 10 according to several other configurations with respect to the transparent layer 24 and the interlayer 32 not specifically illustrated throughout the Figures.

Alternatively, as shown in FIG. 6b, the feeding element 36 may be spaced from and capacitively coupled to the wire antenna element 16 for energizing the wire antenna element 16. In particular, the feeding element 36 passes current to the wire antenna element 16 through the air or a dielectric material, such as the exterior or interior substrates 18, 20. In such embodiments, the feeding element 36 is neither directly wired nor in direct contact with the wire antenna element 16 and is generally disposed non-coplanar with the wire antenna element 16. It is to be appreciated that the feeding element 36 may be spaced from and capacitively coupled to the wire antenna element 16 on the window assembly 10 according to several other embodiments with respect to the transparent layer 24 and the interlayer 32 not specifically illustrated throughout the Figures.

In one embodiment, the feeding element 36 overlaps the slot 34. Specifically, the feeding element 36 may be disposed entirely within the slot 34 for energizing the wire antenna element 16. Alternatively, the feeding element 36 may overlap the outer region 30. In other words, the feeding element 36 may be partially overlapping the outer region 30 and partially overlapping the slot 34 for energizing the wire antenna element 16. In such instances, the feeding element 36 may overlap the transparent layer 24. However, such overlap is merely incidental to positioning of the feeding element 36 on the window assembly 10 and the feeding element 36 is generally not operatively coupled to the transparent layer 24, as will be described below. Alternatively, the feeding element 36 may be disposed entirely within the outer region 30 such that the feeding element 36 is not disposed within the slot 34.

According to the present invention, the wire antenna element 16 is electrically disconnected from the transparent layer 24 such that the wire antenna element 16 operates independent of the transparent layer 24. As mentioned above, the wire antenna element 16 is disposed within the slot 34 such that the wire antenna element 16 is neither directly abutting nor in direct electrical contact with the transparent layer 24. Additionally, the wire antenna element 16 is neither wired nor soldered to the transparent layer 24. Thus, in some instances, the wire antenna element 16 may transmit and/or receive radio waves independent of the transparent layer 24. Said differently, the transparent layer 24 is not an active antenna element operatively coupled to the wire antenna element 16. Radio waves transmitted or received by the wire antenna element 16 pass through the slot 34 and generally are not operatively channeled through the transparent layer 24.

Furthermore, the wire antenna element 16 may also be capacitively decoupled from the transparent layer 24. In other words, the wire antenna element 16 may be decoupled from the transparent layer 24 such that the transparent layer 24 does not function as an active antenna element. It is to be appreciated that the transparent layer 24 may be parasitically coupled to the wire antenna element 16 as the wire antenna element 16 is energized. However, such parasitic coupling may merely be incidental and it is to be appreciated that the wire antenna element 16 still operates independent of the transparent layer 24.

Accordingly, the slot 34 enables uninterrupted transmission and/or reception of radio waves by the wire antenna element 16 as the wire antenna element 16 is energized on the window assembly 10. Simultaneously, the wire antenna element 16 operates generally free of the transparent layer 24 as intended by the present invention. Furthermore, the area 26 of the transparent layer 24 is maximized and the transparent layer 24 may still effectively function for other purposes, such as a defogging or a defrosting element, an infrared radiation absorbing material, and the like.

The feeding element 36 may also be electrically disconnected from the transparent layer 24 such that the feeding element 36 energizes the wire antenna element 16 independent of the transparent layer 24. As mentioned above, the feeding element 36 is coupled to the wire antenna element 16 for energizing the wire antenna element 16. Preferably, the feeding element 36 is not directly wired to the transparent layer 24. Instead, it is preferred that the feeding element 36 is electrically connected to the wire antenna element 16 generally independent of the transparent layer 24. Additionally, the feeding element 36 is preferably capacitively decoupled from the transparent layer 24. As such, the feeding element 36 generally does not energize the transparent layer 24 as an active antenna element. However, it is to be appreciated that the feeding element 36 may incidentally or parasitically be capacitively coupled to the transparent layer 24. In addition, it is to be appreciated that the feeding element 36 may be electrically connected to other components such as the vehicle 12 body, and the like.

The present invention has been described herein in an illustrative manner. It is to be understood that the terminology which has been used is intended to be in the nature of words of description rather than of limitation. Obviously, many modifications and variations of the invention are possible in light of the above teachings. The legal scope of protection is defined by the appended claims.

## Claims

1. A window assembly for a vehicle (12), said window assembly (10) comprising:
an exterior substrate (18) having an inner surface (18a) and an outer surface (18b);
an interior substrate (20) disposed adjacent said exterior substrate (18) and having an inner surface (18a) and an outer surface (18b) with said interior and exterior substrates (20, 18) defining a first peripheral boundary (22);
a transparent layer (24) disposed between said inner surfaces (18a, 20a) of said exterior and interior substrates (18, 20) and defining an area (26) covering said window assembly (10) with said area (26) defining a second peripheral boundary (28), wherein said transparent layer (24) comprises a metal compound such that said transparent layer (24) is electrically conductive;
an outer region (30) defined on said window assembly (10) between said first and second peripheral boundaries (22, 28) and being electrically non-conductive, the window assembly being **characterised in that**: said outer region (30) surrounds said second peripheral boundary (28) to completely separate said transparent layer (24) from a window frame (14) of the vehicle (12);
wherein the window assembly further comprises:
a slot defined within said area (26) and opening into said outer region (30) with said slot (34) being devoid of said transparent layer (24) and electrically non-conductive;
a wire antenna element (16) disposed within said slot (34); and
a feeding element (36) coupled to said wire antenna element (16) for energizing said wire antenna element (16);
wherein said wire antenna element (16) is electrically disconnected from said transparent layer (24).

2. The window assembly as set forth in claim 1 wherein said wire antenna element (16) comprises one of a metal wire and an electrically conductive paste.

3. The window assembly as set forth in any preceding claim wherein said wire antenna element (16) is partially disposed within said outer region (30).

4. The window assembly as set forth in any preceding claim wherein said slot (34) opens into said outer region (30) at two independent locations along said second peripheral boundary (28) of said area (26).

5. The window assembly as set forth in any preceding claim including a plurality of said slots (34).

6. The window assembly as set forth in any preceding claim wherein said feeding element (36) is electrically disconnected from said transparent layer (24) such that said feeding element (36) energizes said wire antenna element (16) independent of said transparent layer (24).

7. The window assembly as set forth in any preceding claim wherein said feeding element (36) is disposed within said outer region (30).

8. The window assembly as set forth in any preceding claim wherein said feeding element (36) is disposed within said slot (34).

9. The window assembly as set forth in any preceding claim wherein said wire antenna element (16) is disposed coplanar with respect to said transparent layer (24).

10. The window assembly as set forth in any preceding claim including an interlayer (32) disposed between said inner surfaces (18a, 20a) of said exterior and interior substrates (18, 20).

11. The window assembly as set forth in claim 10 wherein said transparent layer (24) is disposed between said interlayer (32) and said inner surface (18a, 20a) of one of said exterior and interior substrates (18, 20).

12. The window assembly as set forth in any one of claims 10-11 wherein said wire antenna element (16) is disposed between said interlayer (32) and said inner surface (18a, 20a) of one of said exterior and interior substrates (18, 20).

13. The window assembly as set forth in any preceding claim wherein said metal compound comprises a metal oxide.

14. The window assembly as set forth in any preceding claim wherein said wire antenna element (16) is disposed on said outer surface (18b, 20b) of one of said interior and exterior substrates (20, 18).

15. The window assembly as set forth in any one of claims 1-13 including a second wire antenna element (16) wherein one of said wire antenna elements (16) is disposed on said outer surface (20b) of said interior substrate (20) and the other of said wire antenna elements (16) is disposed on said inner surface (18a) of said exterior substrate (18).

16. The window assembly as set forth in any preceding claim wherein said feeding element (36) is spaced from and capacitively coupled to said wire antenna element (16).

## Patentansprüche

1. Fensteranordnung für ein Fahrzeug (12), wobei die Fensteranordnung (10) Folgendes umfasst:
ein äußeres Substrat (18) mit einer inneren Fläche (18a) und einer äußeren Fläche (18b);
ein inneres Substrat (20), das benachbart dem äußeren Substrat (18) angeordnet ist und eine innere Fläche (18a) und eine äußere Fläche (18b) aufweist, wobei das innere und äußere Substrat (20, 18) eine erste periphere Grenze (22) definieren;
eine transparente Schicht (24), die zwischen der inneren Fläche (18a, 20a) und dem äußeren und inneren Substrat (18, 20) angeordnet ist und einen Bereich (26) definiert, der die Fensteranordnung (10) abdeckt, wobei der Bereich (26) eine zweite periphere Grenze (28) definiert, wobei die transparente Schicht (24) eine Metallverbindung umfasst, so dass die transparente Schicht (24) elektrisch leitend ist;
eine äußere Region (30), die auf der Fensteranordnung (10) zwischen der ersten und zweiten peripheren Grenze (22, 28) definiert ist und elektrisch nicht leitend ist, wobei die Fensteranordnung **dadurch gekennzeichnet ist, dass**:
die äußere Region (30) die zweite periphere Grenze (28) umgibt, um die transparente Schicht (24) vollständig von einem Fensterrahmen (14) des Fahrzeugs (12) zu trennen;
wobei die Fensteranordnung weiter Folgendes umfasst:
einen Steckplatz, der innerhalb des Bereichs (26) definiert ist und in die äußere Region (30) öffnet, wobei der Steckplatz (34) frei von der transparenten Schicht (24) und elektrisch nicht leitend ist;
ein Drahtantennenelement (16), das innerhalb des Steckplatzes (34) angeordnet ist; und
ein Zufuhrelement (36), das mit dem Drahtantennenelement (16) gekoppelt ist, um das Drahtantennenelement (16) unter Strom zu setzen;
wobei das Drahtantenenelement (16) elektrisch von der transparenten Schicht (24) getrennt ist.

2. Fensteranordnung nach Anspruch 1, wobei das Drahtantennenelement (16) eines von einem Metalldraht und einer elektrisch leitenden Paste umfasst.

3. Fensteranordnung nach einem der vorhergehenden Ansprüche, wobei das Drahtantennenelement (16) teilweise innerhalb der äußeren Region (30) angeordnet ist.

4. Fensteranordnung nach einem der vorhergehenden Ansprüche, wobei der Steckplatz (34) in die äußere Region (30) an zwei unabhängigen Lokalisierungen entlang der zweiten periphere Grenzen (28) des Bereichs (26) öffnet.

5. Fensteranordnung nach einem der vorhergehenden Ansprüche, darin eingeschlossen eine Vielzahl der Steckplatze (34).

6. Fensteranordnung nach einem der vorhergehenden Ansprüche, wobei das Zufuhrelement (36) elektrisch von der transparenten Schicht (24) getrennt ist, so dass das Zufuhrelement (36) das Drahtantennenelement (16) unabhängig von der transparenten Schicht (24) unter Strom setzt.

7. Fensteranordnung nach einem der vorhergehenden Ansprüche, wobei das Zufuhrelement (36) innerhalb der äußeren Region (30) angeordnet ist.

8. Fensteranordnung nach einem der vorhergehenden Ansprüche, wobei das Zufuhrelement (36) innerhalb des Steckplatzes (34) angeordnet ist.

9. Fensteranordnung nach einem der vorhergehenden Ansprüche, wobei das Drahtantennenelement (16) koplanar mit Bezug auf die transparente Schicht (24) angeordnet ist.

10. Fensteranordnung nach einem der vorhergehenden Ansprüche, darin eingeschlossen eine Zwischenschicht (32), die zwischen den inneren Flächen (18a, 20a) des äußeren und inneren Substrats (18, 20) angeordnet ist.

11. Fensteranordnung nach Anspruch 10, wobei die transparente Schicht (24) zwischen der Zwischenschicht (32) und der inneren Fläche (18a, 20a) eines des äußeren und inneren Substrats (18, 20) angeordnet ist.

12. Fensteranordnung nach einem der Ansprüche 10 - 11, wobei das Drahtantennenelement (16) zwischen der Zwischenschicht (32) und der inneren Fläche (18a, 20a) eines des äußeren und inneren Substrats (18, 20) angeordnet ist.

13. Fensteranordnung nach einem der vorhergehenden Ansprüche, wobei die Metallverbindung ein Metalloxid umfasst.

14. Fensteranordnung nach einem der vorhergehenden Ansprüche, wobei das Drahtantennenelement (16) auf der äußeren Fläche (18b, 20b) eines des inneren und äußeren Substrats (20, 18) angeordnet ist.

15. Fensteranordnung nach einem der Ansprüche 1 - 13, darin eingeschlossen ein zweites Drahtantennenelement (16), wobei eines der Drahtantennenelemente (16) auf der äußeren Fläche (20b) des inneren Substrats (20) angeordnet ist und das andere der Drahtantennenelemente (16) auf der inneren Fläche (18a) des äußeren Substrats (18) angeordnet ist.

16. Fensteranordnung nach einem der vorhergehenden Ansprüche, wobei das Zufuhrelement (36) von dem Drahtantennenelement (16) beabstandet und kapazitiv mit diesem gekoppelt ist.

## Revendications

1. Ensemble de vitre destiné à un véhicule (12), ledit ensemble de vitre (10) comprenant :
un substrat extérieur (18) ayant une surface interne (18a) et une surface externe (18b) ;
un substrat intérieur (20) disposé de manière adjacente audit substrat extérieur (18) et ayant une surface interne (18a) et une surface externe (18b) avec lesdits substrats intérieur et extérieur (20, 18) définissant une première limite périphérique (22) ;
une couche transparente (24) disposée entre lesdites surfaces internes (18a, 20a) desdits substrats extérieur et intérieur (18, 20) et définissant une zone (26) qui couvre ledit ensemble de vitre (10), avec ladite zone (26) définissant une seconde limite périphérique (28), dans lequel ladite couche transparente (24) comprend un composé métallique de sorte que ladite couche transparente (24) soit électriquement conductrice ;
une zone externe (30) définie sur ledit ensemble de vitre (10) entre lesdites première et seconde limites périphériques (22, 28) et étant électriquement non-conductrice, l'ensemble de vitre étant **caractérisé en ce que** :
ladite zone externe (30) entoure ladite seconde limite périphérique (28) afin de séparer complètement ladite couche transparente (24) d'un cadre de vitre (14) du véhicule (12) ;
dans lequel l'ensemble de vitre comprend en outre :
une fente définie dans ladite zone (26) et qui s'ouvre dans ladite zone externe (30), avec ladite fente (34) étant dépourvue de ladite couche transparente (24) et électriquement non-conductrice ;
un élément d'antenne filaire (16) disposé dans ladite fente (34) ; et
un élément d'alimentation (36) relié audit élément d'antenne filaire (16) afin de fournir de l'énergie audit élément d'antenne filaire (16) ;
dans lequel ledit élément d'antenne filaire (16) est électriquement débranché de ladite couche transparente (24).

2. Ensemble de vitre selon la revendication 1, dans lequel ledit élément d'antenne filaire (16) comprend l'un d'un fil métallique et d'une pâte électriquement conductrice.

3. Ensemble de vitre selon l'une quelconque des revendications précédentes, dans lequel ledit élément d'antenne filaire (16) est partiellement disposé dans ladite zone externe (30).

4. Ensemble de vitre selon l'une quelconque des revendications précédentes, dans lequel ladite fente (34) s'ouvre dans laite zone externe (30) au niveau de deux emplacements indépendants le long de ladite seconde limite périphérique (28) de ladite zone (26).

5. Ensemble de vitre selon l'une quelconque des revendications précédentes, comprenant une pluralité desdites fentes (34).

6. Ensemble de vitre selon l'une quelconque des revendications précédentes, dans lequel ledit élément d'alimentation (36) est électriquement débranché de ladite couche transparente (24) de sorte que ledit élément d'alimentation (36) fournisse de l'énergie audit élément d'antenne filaire (16) indépendant de ladite couche transparente (24).

7. Ensemble de vitre selon l'une quelconque des revendications précédentes, dans lequel ledit élément d'alimentation (36) est disposé dans ladite zone externe (30).

8. Ensemble de vitre selon l'une quelconque des revendications précédentes, dans lequel ledit élément d'alimentation (36) est disposé dans ladite fente (34).

9. Ensemble de vitre selon l'une quelconque des revendications précédentes, dans lequel ledit élément d'antenne filaire (16) est disposé de manière coplanaire par rapport à ladite couche transparente (24) .

10. Ensemble de vitre selon l'une quelconque des revendications précédentes, comprenant une inter-couche (32) disposée entre lesdites surfaces internes (18a, 20a) desdits substrats extérieur et intérieur (18, 20).

11. Ensemble de vitre selon la revendication 10, dans lequel ladite couche transparente (24) est disposée entre ladite inter-couche (32) et ladite surface interne (18a, 20a) de l'un desdits substrats extérieur et intérieur (18, 20).

12. Ensemble de vitre selon l'une quelconque des revendications 10 à 11, dans lequel ledit élément d'antenne filaire (16) est disposé entre ladite inter-couche (32) et ladite surface interne (18a, 20a) de l'un desdits substrats extérieur et intérieur (18, 20).

13. Ensemble de vitre selon l'une quelconque des revendications précédentes, dans lequel ledit composé métallique comprend un oxyde de métal.

14. Ensemble de vitre selon l'une quelconque des revendications précédentes, dans lequel ledit élément d'antenne filaire (16) est disposé sur ladite surface externe (18b, 20b) de l'un desdits substrats intérieur et extérieur (20, 18).

15. Ensemble de vitre selon l'une quelconque des revendications 1 à 13, comprenant un second élément d'antenne filaire (16), dans lequel l'un desdits éléments d'antenne filaire (16) est disposé sur ladite surface externe (20b) dudit substrat intérieur (20), et l'autre desdits éléments d'antenne filaire (16) est disposé sur ladite surface interne (18a) dudit substrat extérieur (18).

16. Ensemble de vitre selon l'une quelconque des revendications précédentes, dans lequel ledit élément d'alimentation (36) est espacé de et relié de manière capacitive audit élément d'antenne filaire (16).
